# FASCICULE DE BREVET EUROPEEN

(11) **EP 0 623 836 B1**
(45) Date de publication et mention de la délivrance du brevet: **02.07.1997**
(21) Numéro de dépôt: 94420129.2
(22) Date de dépôt: 27.04.1994
(51) Int. Cl.: G02C 5/22

(54) **Charnière élastique de lunettes**
Federscharnier für Brille
Resilient hinge for spectacles

(30) Priorité: 04.05.1993 FR 9305543
(43) Date de publication de la demande: 09.11.1994
(73) Titulaire: CHEVASSUS S.A., F-39400 Morez (FR)
(72) Inventeur: Jaffelin, Etienne, F-39220 Les Rousses (FR)
(74) Mandataire: Kiehl, Hubert

(56) Documents cités:
- EP-A- 0 149 230
- EP-A- 0 378 969
- DE-U- 9 012 710
- FR-A- 2 519 434
- GB-A- 859 931

## Description

La présente invention est relative à une charnière élastique pour lunettes, reliant une branche à une façade, cette charnière autorisant un déplacement complémentaire élastique de la branche vers l'extérieur au-delà de sa position dite "ouverte". De telles charnières apportent un élément de confort dans le port de lunettes très apprécié du public, notamment du fait que les branches se plaquent contre les tempes avec une pression raisonnable.

De manière générale, une charnière élastique est composée d'une part d'un charnon de face fixé solidement dans le tenon latéral de la façade, lequel tenon peut être droit, débordant, roulé ou coudé ; et d'autre part d'un charnon de branche relié par un mécanisme de rappel élastique à l'extrémité de la branche, un axe assurant la liaison entre les charnons.

Dans un premier type de mécanisme de rappel connu, un charnon mâle de branche est ménagé à l'extrémité émergente d'une coulisse mobile en translation à l'intérieur d'un boîtier soudé sur la face interne de l'extrémité de la branche. Dans la coulisse est taillée une lumière longitudinale de manière à y loger un ressort dont l'extrémité avant vient buter contre une goupille ou une vis traversant le boîtier et la lumière. Ce type de charnière élastique est, par exemple, décrit dans les documents EP 0 426 947, FR 2 466 788, FR 1 511 263 et EP 0 262 099.

Dans un second type de mécanisme de rappel connu, le charnon de branche également mâle est ménagé à l'extrémité émergente d'un axe mobile en translation à l'intérieur d'un boîtier également solidaire de la face interne de l'extrémité de la branche. Un ressort enfilé autour de cet axe prend appui d'un côté contre une surépaisseur réalisée en bout de l'axe, et de l'autre côté contre une restriction interne du boîtier. Ce type de charnière élastique est, par exemple, décrit dans les documents EP 0 340 161 ou FR 2 609 816.

Dans un troisième type de mécanisme de rappel connu, un charnon femelle de branche est ménagé à l'extrémité du boîtier qui est coulissant le long d'un rail fixé contre la face interne de l'extrémité de la branche. Un ressort interne prenant appui contre une butée proche du charnon repousse en arrière le fond du boîtier. Ce type de charnière élastique est, par exemple, décrit dans les documents EP 0 191 944 ou EP 0 308 533.

Par ailleurs, le bord extérieur de l'extrémité de la branche est en appui contre un talon fixe qui peut être la face intérieure d'un tenon droit, mais qui est plus généralement le bord extérieur de l'extrémité d'un tenon coudé orienté dans l'alignement de la branche. Ainsi, lors d'un mouvement de la branche au-delà de sa position ouverte, le bord intérieur de l'extrémité de la branche s'éloigne de la charnière immobile dans une sorte de rotation autour du point d'appui, mouvement qui comprime le ressort du mécanisme de rappel décrit précédemment.

Si le mouvement d'écartement des branches est exagéré, on induit alors une force de traction excessive au travers du mécanisme de rappel qui se répercute notamment par un écrasement du ressort pouvant modifier, à la longue, sa raideur initiale. De plus, on doit prévoir actuellement, lors de la conception de telles charnières élastiques, des coulisses suffisamment fortes pour tenir des efforts accidentels jusqu'à 40 kilogrammes. L'inconvénient est que ces coulisses et ressorts sont nécessairement gros, ce qui impose des dimensions conséquentes à ces charnières considérées alors comme inesthétiques.

Le but de la présente invention est une charnière élastique pouvant supporter des efforts très importants momentanés sans devoir nécessairement impliquer un sur-dimensionnement du mécanisme de rappel. La conception des pièces constituantes doit toutefois rester simple pour maintenir les coûts de réalisation.

Ces buts sont réalisés, dans une charnière élastique pour monture de lunettes, reliant une branche à une façade, composée d'un charnon de face fixé solidement dans le tenon latéral de la façade, d'un charnon de branche relié par un mécanisme de rappel élastique à l'extrémité de la branche, et d'un talon fixe prolongeant le tenon ou complétant le charnon de face, le bord extérieur de l'extrémité de la branche venant en appui contre ledit talon, du fait que le talon dépasse, en direction de la branche l'axe de la charnière d'une distance supérieure à 0,3 millimètre, et du fait que le charnon de branche présente, en sa face orientée vers la branche, un décrochage venant prendre appui, après rotation d'un angle maximum désiré, contre un angle intérieur du talon situé du côté dudit axe et faisant office de butée.

Ainsi, une fois le mouvement maximum autorisé atteint, le charnon de branche vient s'accrocher dans le talon, ce qui isole le mécanisme de rappel pour tout effort additionnel à l'ouverture. On peut alors envisager sans risque la réalisation de mécanismes beaucoup plus fins et bien plus esthétiques, mécanismes supportant une traction maximum sans déformation de la coulisse par contre nettement inférieure, par exemple de l'ordre de 10 kilogrammes.

Avantageusement, le décrochement est plan, et est orienté de telle sorte à présenter, avec le plan de jonction du talon et de l'extrémité de la branche lorsque celle-ci est en position ouverte, un angle égal à l'angle de rotation maximum désiré. L'accrochage du charnon de branche contre le talon se fait plan contre plan assurant un appui puissant.

L'invention sera mieux comprise à l'étude d'un mode de réalisation pris à titre nullement limitatif et décrit par les figures suivantes dans lesquelles :
- la figure 1 est une vue en coupe d'une charnière élastique avec la branche de lunette en position "ouverte", et
- la figure 2 est une vue en coupe de la charnière élastique de la figure 1, la branche étant en position d'écartement maximum autorisé.

Comme illustré sur les figures, la charnière de lunette comprend sur le côté gauche un charnon de face 10 solidaire de la face interne d'un tenon 6 coudé dont l'autre extrémité est reliée au cercle de verre de la face. Ce charnon de face peut être soudé ou usiné avec le tenon. Sur le côté droit des figures, un charnon de branche 20 est relié à l'extrémité d'une branche 8 par un mécanisme de rappel autorisant un mouvement élastique de cette branche vers la droite.

En l'occurrence, le mécanisme de rappel comprend une coulisse 30 mobile en translation à l'intérieur d'un boîtier 12 contre l'effet d'un ressort 40 logé dans un évidement de cette coulisse. Ce ressort prend appui sur la gauche contre une butée 44 solidaire du boîtier, butée matérialisée ici par une vis ; et sur la droite contre une paroi d'extrémité interne de cette coulisse. Le charnon de branche 20 constituant l'extrémité émergente de la coulisse est relié au charnon de face 10 par un axe 15.

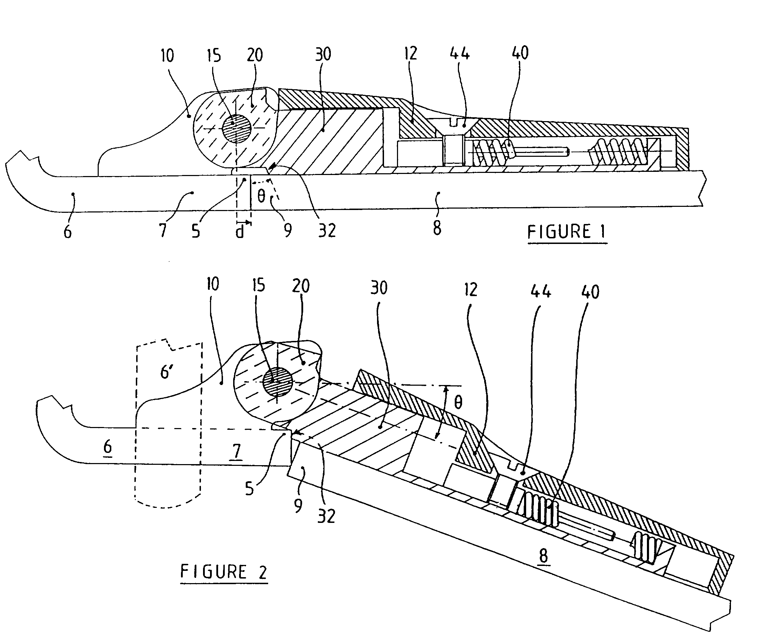

Lorsque la branche est en position "ouverte" tel qu'illustré sur la figure 1, la détente du ressort 40 pousse la butée 44, donc le boîtier 12, vers la gauche ce qui appuie la branche 8 contre l'extrémité du tenon 6 dans un contact plan contre plan orthogonal, cette extrémité faisant office de talon d'appui 7. Usuellement, cette surface de contact talon/branche est située en retrait par rapport à l'axe 15, c'est-à-dire sur la gauche, tel qu'illustré sur la figure 1. A l'inverse, dans la charnière selon l'invention, cette surface de contact est résolument déportée sur la droite d'une distance "d" d'au moins 0,3 millimètre et de préférence 0,5 millimètre à 0,9 millimètre selon la hauteur finale de la charnière, et ce de telle sorte que l'extrémité de ce talon 7 se retrouve beaucoup plus proche de la coulisse 30.

Par ailleurs, selon l'invention, on ménage dans la face de la charnière de branche 20 orientée en vis-à-vis de la branche 8 un décrochement 32 sous la forme d'un plan faisant un angle "θ" avec le plan de jonction talon/branche, et ce en retrait par rapport au niveau de l'axe 15 d'une distance qui est fonction de la hauteur de l'axe et de l'angle θ désiré, et qui est en général sensiblement égale au double de la distance "d", soit de l'ordre d'un à deux millimètres.

Alors, lorsque l'on écarte la branche 8 au-delà de sa position dite "ouverte" tel qu'illustré sur la figure 2, la charnière 20 et la coulisse 30 effectuent une rotation autour de l'axe 15. Le talon 7 impose alors un mouvement de recul à la branche 8, dont l'extrémité 9 ripe contre le bord extérieur de ce talon 7. Ce mouvement de recul de la branche 8 induit une compression dans le ressort 40. Toutefois, et selon l'invention, dès que cet écartement a atteint un angle maximum désiré "θ" compris usuellement entre 15 et 25 degrés, le décrochement 32 vient prendre appui contre le bord intérieur 5 du talon, ce qui accroche la coulisse 30.

En d'autres termes, la proéminence du talon 7 par rapport à l'axe 15 fait que le bord intérieur 5 peut agir comme une butée pour le décrochement 32 dont la forme et la position ont été établies de manière très précise pour venir prendre appui plan contre plan dès que l'angle maximum d'écartement "θ" désiré a été atteint. Tout écartement supplémentaire est donc rendu impossible alors même que les spires du ressort 40 ne sont pas encore jointives, et que la coulisse n'a pas atteint sa limite de traction impliquant une déformation plastique irréversible.

De plus, tous les efforts supplémentaires sont pris entre le talon 7 et la coulisse 30 qui sont des pièces relativement massives au sein de cette charnière, les autres pièces constituantes du mécanisme de rappel étant alors isolées. On peut donc alors calculer ces pièces de mécanisme uniquement en fonction d'une traction maximum et d'une raideur nécessaire et suffisante pour des mouvements limités à l'intérieur de l'angle "θ", valeurs plus faibles qu'auparavant. Ce mécanisme de rappel peut donc être miniaturisé sans risque.

Comme on a pu l'observer, le dispositif de butée selon l'invention implique essentiellement le charnon de branche et le talon du tenon, et peut donc être appliqué à tous les types de mécanisme de rappel.

L'invention n'est pas non plus limitée au tenon coudé 6 tel qu'illustré sur la figure 1, mais elle peut également être appliquée au tenon droit 6' comme représenté en traits tirés sur la figure 2, tenon fréquemment utilisé pour des montures de plastique, pour autant, toutefois, que la charnière de face 10 soit alors complétée d'un talon. De nombreuses améliorations peuvent être apportées à ce dispositif de butée de charnière élastique dans le cadre de cette invention.

## Revendications

1. Charnière élastique pour monture de lunettes, reliant une branche (8) à une façade, composée d'un charnon de face (10) fixé solidement dans le tenon (6) latéral de la façade, d'un charnon de branche (20) relié par un mécanisme de rappel élastique (12,30,40,44) à l'extrémité de la branche (8), et d'un talon (7) fixe prolongeant le tenon (6) ou complétant le charnon de face, le bord extérieur de l'extrémité (9) de la branche (8) venant en appui contre ledit talon (7), caractérisée en ce que le talon (7) dépasse, en direction de la branche (8), l'axe (15) de la charnière d'une distance (d) supérieure à 0,3 millimètre, et en ce que le charnon de branche (20) présente, en sa face orientée vers la branche, un décrochage (32) venant prendre appui, après rotation d'un angle maximum désiré (θ), contre un angle intérieur (5) du talon (7) situé du côté dudit axe (15) et faisant office de butée.

2. Charnière élastique selon la revendication 1, caractérisée en ce que le décrochement (32) est plan, faisant, avec le plan de jonction du talon (7) et de l'extrémité (9) de la branche (8) lorsque celle-ci est en position ouverte, un angle égal à l'angle de rotation maximum désiré (θ).

## Patentansprüche

1. Elastisches Scharnier für eine Brillenfassung, das einen Bügel (8) mit einem Mittelteil verbindet, bestehend aus einem vorderen Scharnierteil (10), welches fest im seitlichen Bügelhalter (6) des Mittelteils gehalten ist, einem Bügelscharnierteil (20), das durch einen elastischen Rückstell-Mechanismus (12, 30, 40, 44 ) mit dem Ende des Bügels (8) verbunden ist, und einem festen hinteren Ende (7), das den Bügelhalter (6) verlängert oder das vordere Scharnierteil ergänzt, wobei der äuBere Rand des Endes (9) des Bügels (8) gegen ein festes hinteres Ende (7) drückt, **dadurch gekennzeichnet,** daB das hintere Ende (7) in Richtung auf den Bügel (8) um eine 0,3 mm übersteigende Distanz (d) über die Achse (15) des Scharniers vorsteht, und daB das Bügelscharnierteil (20) in seiner dem Bügel zugewandten Fläche einen Absatz (32) aufweist, welcher nach Drehung um einen maximalen gewünschten Winkel (θ) gegen eine innere Ecke (5) des hinteren Endes (7) anschlägt, die nahe der Achse (15) liegt und als Anschlag dient.

2. Elastisches Scharnier nach Anspruch 1, **dadurch gekennzeichnet,** daß der Absatz (32) flach ist und mit der Ebene, in welcher das hintere Ende (7) und das Ende (9) des Bügels (8) aneinanderstoßen, wenn sich dieser in seiner geöffneten Stellung befindet, einen Winkel bildet, der gleich dem maximalen gewünschten Drehwinkel (θ) ist.

## Claims

1. An elastic hinge for a spectacle frame, connecting a side arm (8) to a front part, made of a front-hinge element (10) securely fixed to a side lug (6) of the front part and of a side-hinge element (20) connected by elastic biasing means (12, 30, 40, 44) to the end of the side arm (8), and a fixed heel (7) extending from a lug (6) or integral with the front-hinge element, the side arm (8) having an end (9) with an outer edge bearing against said heel (7), characterized in that the heel (7) extends in the direction of the side arm (8) beyond the axis (15) of the hinge by a distance (d) greater than 0.3 millimeters, and in that the side-hinge element (20) has, in its face directed towards the side arm, a recessed edge (32) which, after rotation through a desired maximum angle (θ), comes to bear against an abutment-forming inside angled-edge (5) of the heel (7) situated beside the axis (15).

2. The elastic hinge according to claim 1, characterized in that the recessed edge (32) is planar and forms, with the joining plane of the heel (7) and the end (9) of the side arm (8) when the latter is in the open position, an angle equal to the desired maximum angle of rotation (θ).
